# EUROPÄISCHE PATENTSCHRIFT

(11) **EP 3 868 266 B1**
(45) Veröffentlichungstag und Bekanntmachung des Hinweises auf die Patenterteilung: **20.04.2022**
(21) Anmeldenummer: 21155195.7
(22) Anmeldetag: 04.02.2021
(51) Int. Cl.: A47J 43/28, A47G 21/10, A47J 37/07

(54) **ARRETIERBARE GRILLZANGE**
LOCKABLE BARBECUE TONGS
PINCE DE BARBECUE POUVANT ÊTRE BLOQUÉE

(30) Priorität: 21.02.2020 DE 102020202232
(43) Veröffentlichungstag der Anmeldung: 25.08.2021
(73) Patentinhaber: WMF GmbH, 73312 Geislingen/Steige (DE)
(72) Erfinder: Kühn, Manuel, 73525 Schwäbisch Gmünd (DE); Mang, Werner, 73312 Geislingen (DE)
(74) Vertreter: Pfenning, Meinig & Partner mbB

(56) Entgegenhaltungen:
- WO-A1-2015/082092
- WO-A2-2007/061461
- US-B1- 7 261 348

## Beschreibung

Die vorliegende Erfindung betrifft eine Grillzange, deren Greifarme arretierbar gelagert sind und deren Arretiermechanik vollständig innerhalb eines Rohrgriffs integriert ist. Auf diese Weise werden Verletzungen des Nutzers verhindert und eine einarmige Bedienung ermöglicht.

Die Druckschrift WO 2015/082092 A1 offenbart eine arretierbare Grillzange, umfassend zwei Greifarme, die jeweils an einem ersten Ende eine Greiffläche zum Greifen von Grillgut aufweisen und an einem zweiten Ende in einem Rohr-griff so gelagert sind, dass die ersten Enden um eine Drehachse, welche als Achselement im Rohrgriff in einem ersten Endbereich des Rohrgriffs angeordnet ist, gegeneinander bewegbar sind, mit einer Feder, die von dem Achselement durchgriffen wird und zwischen den beiden Greifarmen angeordnet ist.

Grillzangen dienen üblicherweise dem Greifen von Nahrungsmitteln, bei denen es vorteilhaft ist, direkten Kontakt mit den Händen aus Gründen der Sicherheit, Gesundheit oder Hygiene zu vermeiden. Bekannte Grillzangen weisen zwei Greifarme auf, die an einem Ende über eine Drehachse oder ein Drehgelenk miteinander verbunden sind. Die schwenkbaren Greifarme sind üblicherweise aus Metall oder Hartplastik ausgebildet und sind an einem anderen Ende so geformt, dass sie das Greifen von Nahrungsmitteln und andere Gegenstände ermöglichen.

Ein Öffnen der Greifarme wird dabei häufig durch eine Feder unterstützt. Ein Nachteil der im Stand der Technik bekannten Grillzangen ist, dass ein Öffnen oder Schließen nicht präzise gesteuert werden kann und es zu einem Aufspringen der Greifarme kommen kann. Hierdurch kann es zu Klemmungen bzw. Quetschungen der Haut beim Benutzen der Grillzange kommen.

Auch müssen bei den im Stand der Technik bekannten Grillzangen meistens beide Hände zum Betätigen des Verschlussmechanismus benutzt werden.

Ausgehend von diesem Stand der Technik ist die Aufgabe der vorliegenden Erfindung, eine Grillzange zur Verfügung zu stellen, welche ein unkontrolliertes Aufspringen der Grillzange verhindert und durch eine im Wesentlichen vollständige Integration einer Arretiermechanik in einem Rohrgriff Hautquetschungen des Nutzers vermeidet.

Diese Aufgabe wird durch die Grillzange mit den Merkmalen des Anspruchs 1 gelöst. Vorteilhafte Weiterbildungen der erfindungsgemäßen Grillzange werden in den abhängigen Ansprüchen aufgeführt.

Die erfindungsgemäße Grillzange umfasst zwei Greifarme, die jeweils an einem ersten Ende eine Greiffläche zum Greifen von Grillgut aufweisen und an einem zweiten Ende so gelagert sind, dass die ersten Enden um eine Drehachse, welche als Achselement im Rohrgriff in einem ersten Endbereich des Rohrgriffs angeordnet ist, gegeneinander bewegbar sind.

Weiterhin umfasst die erfindungsgemäße Grillzange eine Feder, die von dem Achselement durchgriffen wird und zwischen den beiden Greifarmen angeordnet ist, sowie eine Kulisse und eine Schiebereinheit.

Die Kulisse ist dabei in einem zweiten Endbereich des Rohrgriffs im Rohrgriff angeordnet und mit dem Rohrgriff fest verbunden. Die Schiebereinheit erstreckt sich in einer radialen Richtung des Rohrgriffs im Wesentlichen innerhalb des Rohrgriffs und ragt entlang einer Längsachse des Rohrgriffs über den zweiten Endbereich des Rohrgriffs hinaus.

Ferner ist das Achselement erfindungsgemäß mit der Schiebereinheit fest verbunden und mittels eines Führungselements im Wesentlichen entlang der Längsachse des Rohrgriffs verschiebbar. Die Feder ist eingerichtet die zweiten Enden der beiden Greifarme auf die sich zum ersten Endbereich des Rohrgriffs hin verjüngende Kulisse zu drücken.

Auf Grund des Umstands, dass die Feder, welche vorteilhafterweise als Schenkelfeder ausgebildet ist, die beiden zweiten Enden der Greifarme unabhängig vom Öffnungswinkel der Grillzange auf die Kulisse drückt, kann ein unkontrolliertes Aufspringen der Grillzange unterbunden werden.

Vorteilhafterweise sind die Führungselemente als Aussparungen oder Ausschnitte im Rohrgriff vorgesehen, welche auf zwei gegenüberliegenden Seiten des Rohrgriffs angeordnet sind. Das Achselement durchgreift die Aussparungen vorzugsweise in der radialen Richtung und kann entlang der Längsachse des Rohrgriffs bewegt werden. Entlang des Umfangs des Rohrgriffs ist das Achselement innerhalb der Aussparungen vorteilhafterweise im Wesentlichen spielfrei angeordnet.

Alternativ ist das Führungselement vorzugsweise in Form von zwei gegenüberliegende Führungsschienen auf der Innenseite des Rohrgriffs ausgestaltet.

Eine Länge der Projektion der Verjüngung der Kulisse auf die Längsachse des Rohrgriffs entspricht vorteilhafterweise mindestens der Länge des Führungselements, insbesondere der Aussparungen oder der linearen Führungsschienen, entlang der Längsachse des Rohrgriffs. Durch diese Ausgestaltung wird gewährleistet, dass die Greifarme den ganzen Bereich an Öffnungswinkeln, welcher von der Form der Kulisse im Wesentlichen bestimmt wird, abdecken können. Als Öffnungswinkel wird hier der Winkel verstanden, welcher zwischen einem der beiden Greifarme und der Ebene eingeschlossen wird, welche von der Längsachse des Rohrgriffs und einer Achse, welche parallel zum Achselement verläuft, aufgespannt wird.

Der maximale Öffnungswinkel entspricht dabei dem Zustand, in welchem die Schiebereinheit soweit wie möglich in den Rohrgriff geschoben ist. Dadurch ist das Achselement an der Position innerhalb des Führungselements angeordnet, welche dem ersten Ende der Greifarme am nächsten ist und die zweiten Enden der Greifarme werden von der Feder auf einen schmalen Endbereich der Kulisse gedrückt.

Der minimale Öffnungswinkel entspricht dabei dem Zustand, in welchem die Schiebereinheit soweit wie möglich aus dem Rohrgriff hinausgeschoben ist. Dadurch ist das Achselement an der Position innerhalb des Führungselements angeordnet, welche am weitesten entfernt von dem ersten Ende der Greifarme ist und die zweiten Enden der Greifarme werden von der Feder auf einen breiten Endbereich der Kulisse gedrückt.

Dass der am weitesten hinausgezogene Zustand der Schiebereinheit dem geschlossenen Zustand der Grillzange entspricht, hat den Vorteil, dass die Grillzange platzsparend an der Öse aufgehängt werden kann.

Weiterhin hat die Abbildung von Position der Schiebereinheit auf den Öffnungswinkel der Greifarme den Vorteil, dass die Grillzange unter Zuhilfenahme eines festen Gegenstands, wie beispielsweise eines Hakens oder eines Tischs, durch drücken bzw. ziehen einhändig geöffnet bzw. geschlossen werden kann.

Zudem weist der breite Endbereich der Kulisse vorteilhafterweise eine konstante Breite in einer Haupterstreckungsebene auf. Die Haupterstreckungsebene des breiten Endbereichs der Kulisse ist dabei eine Ebene, welche senkrecht zum Achselement durch die Symmetrieachse des Rohrgriffs verläuft. Das heißt, dass die Kontur der Kulisse in dem breiten Endbereich im Wesentlichen parallel zur Längsachse des Rohrgriffs verläuft. Diese Ausgestaltung hat den Vorteil, dass die Stabilität der Arretierung der Greifarme im geschlossenen Zustand erhöht wird.

Die Form der Kulisse ist dabei nicht festgelegt und es eignen sich hierfür verschiedene Formen. So kann beispielsweise ein Längsprofil der Verjüngung der Kulisse symmetrisch oder asymmetrisch relativ zur Längsachse des Rohrgriffs geformt sein. Das Längsprofil der Verjüngung kann dabei auch vorteilhafterweise einen Ellipsenbogen oder einen Kreisbogen beschreiben.

Alternativ kann sich die Kulisse vorteilhafterweise auch linear als Funktion des Abstands zum ersten Endbereich des Rohrgriffs verjüngen.

In einer weiteren vorteilhaften Ausgestaltung der Grillzange erstreckt sich die Schiebereinheit in einer radialen Richtung des Rohrgriffs im Wesentlichen innerhalb der Kulisse. Ein Ende der Schiebereinheit, welche aus dem zweiten Endbereich entlang der Längsachse des Rohrgriffs hinausragt, weist vorteilhafterweise eine Öse auf und kann auch in radialer Richtung über den Rohrgriff hinausragen.

Der maximale Öffnungswinkel der beiden Greifarme der Grillzange ist abhängig von mehreren Parametern. Die Parameter umfassen beispielsweise einen Neigungswinkel der Kulisse, die Position des Achselements innerhalb des Führungselements entlang der Längsachse des Rohrgriffs, der Lage und Anordnung des Führungselements im ersten Endbereich des Rohrgriff, der Form der Greifarme an ihren zweiten Enden und dem Durchmesser des Rohrgriffs. Vorteilhafterweise sind besagte Parameter so aufeinander abgestimmt, dass sich die beiden Greifarme und der Rohrgriff im Wesentlichen nicht berühren. Dadurch, dass kein Kontakt zwischen Rohrgriff und den Greifarmen entsteht, können Kratzer auf Sichtflächen der Greifarme vermieden werden. Zudem wird durch die Abstimmung aller Funktionsteile ein klapperfreies Benutzen der Grillzange gewährleistet.

Vorzugsweise enthalten oder bestehen die Greifarme, der Rohrgriff, die Feder, das Achselement, die Kulisse und die Schiebereinheit aus Edelstahl, wodurch die Langlebigkeit der Grillzange erhöht wird.

Im Folgenden soll die Erfindung anhand einiger Figuren beispielhaft erläutert werden. Gleiche oder entsprechende Bezugszeichen kennzeichnen dabei gleiche oder entsprechende Merkmale, so dass deren Erläuterung gegebenenfalls nicht wiederholt wird. Die nachfolgenden Beispiele weisen eine Vielzahl zusätzlicher Merkmale auf, welche die Erfindung weiterhin verbessern können. Die in den Beispielen beschriebenen Merkmale können darüberhinaus unabhängig von den entsprechenden Beispielen realisiert werden und zwischen verschiedenen Beispielen kombiniert werden.

### Bezugszeichenliste:

Greifarme 1, 1a, 1b
Rohrgriff 2
Führungselement 3
Achselement 4
Schiebereinheit 5
Kulisse 6
Feder 7
Es zeigt
Figur 1(a) eine Seitenansicht einer beispielhaften Ausgestaltung einer erfindungsgemäßen arretierbaren Grillzange in geöffnetem Zustand,
Figur 1(b) zeigt einen Querschnitt der Grillzange gemäß Fig. 1(a) in der Schnittebene A,
Figur 1(c) zeigt einen Querschnitt der Grillzange gemäß Fig. 1(a) in der Schnittebene C,
Figur 2(a) eine Aufsicht einer Grillzange gemäß Fig. 1(a),
Figur 2(b) einen Querschnitt der Grillzange gemäß Fig. 2(a) in der Schnittebene B,
Figur 3(a) eine Seitenansicht einer Grillzange gemäß Fig. 1(a) in geschlossenem Zustand,
Figur 3(b) zeigt einen Querschnitt der Grillzange gemäß Fig. 3(a) in der Schnittebene A,
Figur 3(c) zeigt einen Querschnitt der Grillzange gemäß Fig. 3(a) in der Schnittebene C,
Figur 4(a) eine Aufsicht einer Grillzange gemäß Fig. 1(a) in geschlossenem Zustand,
Figur 4(b) einen Querschnitt der Grillzange gemäß Fig. 4(a) in der Schnittebene B.

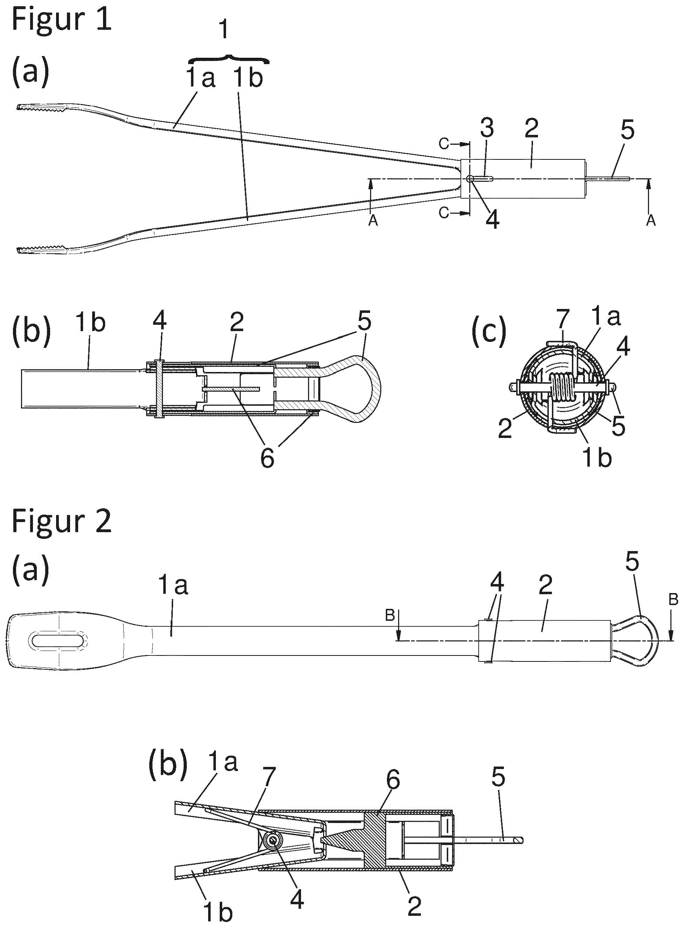

Figur 1(a) zeigt eine beispielhafte Ausgestaltung einer erfindungsgemäßen arretierbaren Grillzange in der Seitenansicht im geöffneten Zustand. Beide Greifarme 1a, 1b weisen an ihren ersten Enden eine leichte konvexe Überhöhung weg von der Längsachse der Grillzange auf. Zudem weisen die beiden Greifarme 1a, 1b auf den sich zugewandten Seiten der Greifflächen jeweils Zacken an ihrem Außenrand auf, welche das aufnehmen und festhalten von Grillgut erleichtern. Zweite Enden der Greifarme 1 sind nicht sichtbar im ersten Endbereich eines Rohrgriffs 2 angeordnet. Der Rohrgriff 2 weist die Form eines Zylinders auf, wobei sein Radius kleiner als seine Höhe ist.

Ein Führungselement 3 ist als Aussparung mit einer Haupterstreckungsrichtung entlang der Längsachse des Rohrgriffs in einem ersten Endbereich des Rohrgriffs 2 vorgesehen. Ein Achselement 4, um welches die beiden Greifarme gegeneinander drehbar gelagert sind, ist in der gezeigten, offenen Konfiguration der Grillzange, an einem Ende der Aussparungen positioniert, welches dem ersten Ende der Greifarme am nächsten ist.

Ein Abschnitt einer Schiebereinheit 5 ragt in der gezeigten, offenen Konfiguration, aus einem zweiten Endbereich entlang der Längsachse des Rohrgriffs um etwa ein drittel der Länge des Rohrgriffs 2 heraus.

Figur 1 (b) zeigt einen Querschnitt der in Figur 1 (a) Grillzange in der Schnittebene A, welche senkrecht zu der in Figur 1(a) dargestellten Sichtebene und der Schnittebene C verläuft.

Das Achselement 4 ist als Niet ausgebildet und erstreckt sich entlang einer Achse, die senkrecht zur Längsachse des Rohrgriffs 2 steht. Die Schiebereinheit 4 erstreckt sich von der Niet, mit welcher sie fest verbunden ist, bis über den zweiten Endbereich des Rohrgriffs hinaus, wobei sie an einem Ende, welches über den Rohrgriff 2 hinausragt, als Öse ausgebildet ist. In der gezeigten Darstellung erstreckt sich ein Abschnitt der Kulisse 6, welcher einen sich verjüngende Abschnitt der Kulisse 6 umfasst, im Wesentlichen Entlang der Symmetrieachse des Rohrgriffs 2. Ein anderer Abschnitt der Kulisse 6 erstreckt sich im Wesentlich entlang des Rohrgriffs 2 im zweiten Endbereich des Rohrgriffs 2.

Figur 1 (c) zeigt einen Querschnitt der in Figur 1 (a) Grillzange in der Schnittebene C, welche senkrecht zu der in Figur 1(a) dargestellten Sichtebene und der Schnittebene A verläuft. Das Achselement 4 durchgreift den Rohrgriff 2 in radialer Richtung in den auf zwei gegenüberliegenden Seiten des Rohrgriffs ausgebildeten Aussparungen. Eine Feder 7, welche von dem Achselement, in diesem Fall der Niet, durchgriffen wird, ist als Schenkelfeder ausgebildet. Die Öse, welche Teil der Schiebereinheit 4 ist, ragt in radialer Richtung leicht über den Rohrgriff 2 hinaus.

Figur 2 (a) zeigt eine Aufsicht der Grillzange gemäß Figur 1(a). Die ersten Enden der Greifarme 1 sind laffenförmig ausgestaltet und weisen in ihrer Mitte eine Aussparung auf.

Figur 2 (b) zeigt einen Querschnitt der Grillzange gemäß Figur 2(a) in der Schnittebene B. Die Kulisse 6 weist einen keilförmigen, sich zum ersten Endbereich des Rohrgriffs hin verjüngenden Abschnitt auf und einen weiteren Abschnitt, welcher mit dem Rohrgriff im Wesentlichen im zweiten Endbereich des Rohrgriffs fest verbunden ist. Der sich verjüngende Abschnitt der Kulisse 6 erstreckt sich im Wesentlichen in einer Ebene, welche senkrecht zum Achselement 4 durch die Symmetrieachse des Rohrgriffs verläuft. Wie in den Figuren 1(a) bis 2(a) ist die Schiebereinheit 5 so weit wie möglich in den Rohrgriff 2 geschoben. Dies bedingt, dass das Achselement 4 sich innerhalb des Führungselements 3 an der Position befindet, welche den ersten Enden der Greifarme 1 am nächsten ist, und die Greifarme 1 den größtmöglichen Öffnungswinkel aufweisen, da die Greifarme 1 von der Feder 7 von einen schmalen Endbereich der Kulisse 6 gedrückt werden.

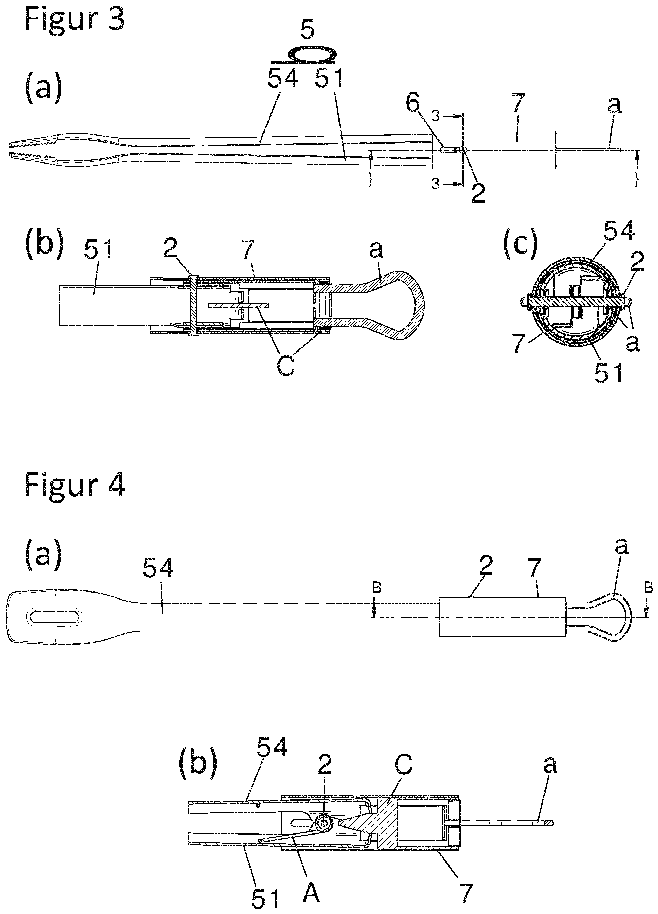

Figur 3 (a) zeigt eine Seitenansicht einer Grillzange gemäß Figur 1(a) in geschlossenem Zustand. Die Schiebereinheit 5 ragt in dieser Konfiguration so weit wie möglich aus dem Rohrgriff 3 heraus, was zur Folge hat, dass das Achselement 4, welches mit der Schiebereinheit 5 fest verbunden ist, sich innerhalb des Führungselements 3 an der Position befindet, welche von den ersten Enden der Greifarme 1 am weitesten entfernt ist.

Figur 3 (b) zeigt einen Querschnitt der in Figur 3(a) Grillzange in der Schnittebene A, welche senkrecht zu der in Figur 3(a) dargestellten Sichtebene und der Schnittebene C verläuft.

Figur 3 (c) zeigt einen Querschnitt der in Figur 1 (a) Grillzange in der Schnittebene C, welche senkrecht zu der in Figur 1(a) dargestellten Sichtebene und der Schnittebene A verläuft.

Figur 4 (a) zeigt eine Aufsicht der Grillzange gemäß Figur 3(a).

Figur 4 (b) zeigt einen Querschnitt der Grillzange gemäß Figur 4(a) in der Schnittebene B. Wie in den Figuren 3(a) bis 4(a) ist die Schiebereinheit 5 so weit wie möglich aus dem Rohrgriff 2 heraus geschoben. Dies bedingt, dass das Achselement 4 sich innerhalb des Führungselements 3 an der Position befindet, welche den ersten Enden der Greifarme 1 am weitesten entfernt ist, und die Greifarme 1 den kleinstmöglichen Öffnungswinkel aufweisen, da die Greifarme 1 von der Feder 7 auf einen breiten Endbereich der Kulisse 6 gedrückt werden. Die Ausdehnung des breiten Endbereich der Kulisse innerhalb der Erstreckungsebene ist im Wesentlichen konstant und die Kontur des breiten Endbereichs verläuft im Wesentlichen parallel zur Längsachse des Rohrgriffs.

## Patentansprüche

1. Arretierbare Grillzange, umfassend:
zwei Greifarme (1, 1a, 1b), die jeweils an einem ersten Ende eine Greiffläche zum Greifen von Grillgut aufweisen und an einem zweiten Ende in einem Rohrgriff (2) so gelagert sind, dass die ersten Enden um eine Drehachse, welche als Achselement (4) im Rohrgriff (2) in einem ersten Endbereich des Rohrgriffs (2) angeordnet ist, gegeneinander bewegbar sind, eine Feder (7), die von dem Achselement (4) durchgriffen wird und zwischen den beiden Greifarmen (1, 1a, 1b) angeordnet ist, **gekennzeichnet durch** eine Kulisse (6) und eine Schiebereinheit (5),
wobei die Kulisse (6) in einem zweiten Endbereich im Rohrgriff (2) angeordnet ist und mit dem Rohrgriff (2) fest verbunden ist,
wobei die Schiebereinheit (5) sich in einer radialen Richtung des Rohrgriffs (2) im Wesentlichen innerhalb des Rohrgriffs (2) erstreckt und entlang einer Längsachse des Rohrgriffs (2) über den zweiten Endbereich des Rohrgriffs (2) hinausragt,
wobei das Achselement (4) mit der Schiebereinheit (5) fest verbunden ist und mittels eines Führungselements (3) im Wesentlichen entlang der Längsachse des Rohrgriffs (2) beweglich angeordnet ist, und
wobei die Feder (7) eingerichtet ist, die zweiten Enden der beiden Greifarme (1, 1a, 1b) auf die sich zum ersten Endbereich des Rohrgriffs (2) hin verjüngende Kulisse (6) zu drücken.

2. Arretierbare Grillzange nach dem vorhergehenden Anspruch, wobei das Führungselement (3) als Aussparungen des Rohrgriffs (2), welche auf zwei gegenüberliegenden Seiten des Rohrgriffs (2) angeordnet sind, ausgebildet ist, und das Achselement (4) die Aussparungen in der radialen Richtung durchgreift.

3. Arretierbare Grillzange nach Anspruch 1, wobei das Führungselement (4) als zwei gegenüberliegende lineare Führungsschienen auf der Innenseite des Rohrgriffs (2) ausgestaltet ist.

4. Arretierbare Grillzange nach Anspruch 2 oder 3, wobei eine Länge einer Projektion der Verjüngung der Kulisse (6) auf die Längsachse des Rohrgriffs mindestens einer Länge des Führungselements (3), insbesondere der Aussparungen oder der linearen Führungsschienen, entlang der Längsachse entspricht.

5. Arretierbare Grillzange nach einem der vorhergehenden Ansprüche, wobei ein Längsprofil der Verjüngung der Kulisse (6) symmetrisch oder asymmetrisch relativ zur Längsachse des Rohrgriffs (2) geformt ist.

6. Arretierbare Grillzange nach einem der vorhergehenden Ansprüche, **dadurch gekennzeichnet, dass** sich die Kulisse (6) linear als Funktion des Abstands zum ersten Endbereich des Rohrgriffs (2) hin verjüngt.

7. Arretierbare Grillzange nach einem der Ansprüche bis 5, wobei das Längsprofil der Verjüngung einen Ellipsenbogen oder einen Kreisbogen beschreibt.

8. Arretierbare Grillzange nach dem vorhergehenden Anspruch, wobei die Schiebereinheit (5) sich in einer radialen Richtung des Rohrgriffs im Wesentlichen innerhalb der Kulisse (6) erstreckt.

9. Arretierbare Grillzange nach einem der vorhergehenden Ansprüche, wobei die Schiebereinheit (5) an einem Ende, welches aus dem Rohrgriff (2) hinausragt, eine Öse aufweist.

10. Arretierbare Grillzange nach einem der vorhergehenden Ansprüche, wobei ein Durchmesser des Rohrgriffs (2), ein Öffnungswinkel der Verjüngung der Kulisse (6), eine Form der zweiten Enden der Greifarme (1, 1a, 1b) und eine Position des Achselements (4) im Rohrgriff (2) so abgestimmt sind, dass sich die Greifarme (1, 1a, 1b) und der Rohrgriff (2) nicht berühren.

11. Arretierbare Grillzange nach einem der vorhergehenden Ansprüche, wobei die Greifarme (1, 1a, 1b), der Rohrgriff (2), die Feder (7), das Achselement (4), die Kulisse (6) und die Schiebereinheit (5) Edelstahl enthalten oder daraus bestehen.

12. Arretierbare Grillzange nach einem der vorhergehenden Ansprüche, **dadurch gekennzeichnet, dass** das Achselement (4) als Niet ausgebildet ist.

## Claims

1. Lockable barbecue tongs, comprising:
two gripper arms (1, 1a, 1b), each, at a first end, comprising a gripping surface for gripping items to be grilled and, at a second end, being mounted in a tubular handle (2) in such a way that the first ends can be moved with respect to one another about an axis of rotation, which is arranged as an axis element (4) in the tubular handle (2) in a first end region of the tubular handle (2);
a spring (7), through which the axis element (4) extends and which is arranged between the two gripper arms (1, 1a, 1b), **characterized by** a slot (6) and a sliding unit (5),
the slot (6) being arranged in a second end region in the tubular handle (2) and fixedly connected to the tubular handle (2),
the sliding unit (5) extending essentially within the tubular handle (2) in a radial direction of the tubular handle (2) and protruding beyond the second end region of the tubular handle (2) along a longitudinal axis of the tubular handle (2),
the axis element (4) being fixedly connected to the sliding unit (5) and being movably arranged essentially along the longitudinal axis of the tubular handle (2) by means of a guide element (3), and the spring (7) being configured to press the second ends of the two gripper arms (1, 1a, 1b) on the slot (6) tapering toward the first end region of the tubular handle (2).

2. The lockable barbecue tongs according to the preceding claim, wherein the guide element (3) is designed as recesses of the tubular handle (2), which are arranged on two opposing sides of the tubular handle (2), and the axis element (4) extends through the recesses in the radial direction.

3. The lockable barbecue tongs according to claim 1, wherein the guide element (4) is designed as two opposing linear guide rails on the inside of the tubular handle (2).

4. The lockable barbecue tongs according to claim 2 or 3, wherein a length of a projection of the taper of the slot (6) on the longitudinal axis of the tubular handle corresponds at least to a length of the guide element (3), and in particular of the recesses or the linear guide rails, along the longitudinal axis.

5. The lockable barbecue tongs according to any one of the preceding claims, wherein a longitudinal profile of the taper of the slot (6) is shaped symmetrically or asymmetrically relative to the longitudinal axis of the tubular handle (2).

6. The lockable barbecue tongs according to any one of the preceding claims, **characterized in that** the slot (6) tapers linearly as a function of the distance with respect to the first end region of the tubular handle (2).

7. The lockable barbecue tongs according to any one of claims 1 to 5, wherein the longitudinal profile of the taper describes an elliptical arc or a circular arc.

8. The lockable barbecue tongs according to the preceding claim, wherein the sliding unit (5) extends essentially within the slot (6) in a radial direction of the tubular handle.

9. The lockable barbecue tongs according to any one of the preceding claims, wherein the sliding unit (5) at one end, which protrudes from the tubular handle (2), includes an eyelet.

10. The lockable barbecue tongs according to any one of the preceding claims, wherein a diameter of the tubular handle (2), an opening angle of the taper of the slot (6), a shape of the second ends of the gripper arms (1, 1a, 1b) and a position of the axis element (4) in the tubular handle (2) are matched in such a way that the gripper arms (1, 1a, 1b) and the tubular handle (2) do not make contact with one another.

11. The lockable barbecue tongs according to any one of the preceding claims, wherein the gripper arms (1, 1a, 1b), the tubular handle (2), the spring (7), the axis element (4), the slot (6) and the sliding unit (5) comprise or are made of stainless steel.

12. The lockable barbecue tongs according to any one of the preceding claims, **characterized in that** the axis element (4) is designed as a rivet.

## Revendications

1. Pince pour barbecue pouvant être bloquée, comprenant :
deux bras de préhension (1, 1a, 1b), qui présentent respectivement à une première extrémité une surface de préhension pour saisir un produit à griller et sont montés à une deuxième extrémité dans une poignée tubulaire (2), de sorte que les premières extrémités sont mobiles l'une par rapport à l'autre autour d'un axe de rotation, lequel est disposé en tant qu'élément axial (4) dans la poignée tubulaire (2) dans une première zone d'extrémité de la poignée tubulaire (2),
un ressort (7), qui est traversé par l'élément axial (4) et est disposé entre les deux bras de préhension (1, 1a, 1b), **caractérisée par** une coulisse (6) et une unité coulisseau (5),
dans laquelle la coulisse (6) est disposée dans une deuxième zone d'extrémité dans la poignée tubulaire (2) et est reliée fixement à la poignée tubulaire (2),
dans laquelle l'unité coulisseau (5) s'étend dans une direction radiale de la poignée tubulaire (2) sensiblement à l'intérieur de la poignée tubulaire (2) et fait saillie de la deuxième zone d'extrémité de la poignée tubulaire (2) le long d'un axe longitudinal de la poignée tubulaire (2),
dans laquelle l'élément axial (4) est relié fixement à l'unité coulisseau (5) et est disposé de manière mobile au moyen d'un élément de guidage (3) sensiblement le long de l'axe longitudinal de la poignée tubulaire (2), et dans laquelle le ressort (7) est conçu pour presser les deuxièmes extrémités des deux bras de préhension (1, 1a, 1b) sur la coulisse (6) s'amincissant en direction de la première zone d'extrémité de la poignée tubulaire (2).

2. Pince pour barbecue pouvant être bloquée selon la revendication précédente, dans laquelle l'élément de guidage (3) est réalisé sous la forme d'évidements de la poignée tubulaire (2), lesquels sont disposés sur deux faces opposées de la poignée tubulaire (2), et l'élément axial (4) traverse les évidements dans la direction radiale.

3. Pince pour barbecue pouvant être bloquée selon la revendication 1, dans laquelle l'élément de guidage (4) est conçu sous la forme de deux rails de guidage linéaires opposés sur la face intérieure de la poignée tubulaire (2).

4. Pince pour barbecue pouvant être bloquée selon la revendication 2 ou 3, dans laquelle une longueur d'une projection de l'amincissement de la coulisse (6) sur l'axe longitudinal de la poignée tubulaire correspond au moins à une longueur de l'élément de guidage (3), en particulier des évidements ou des rails de guidage linéaires, le long de l'axe longitudinal.

5. Pince pour barbecue pouvant être bloquée selon l'une quelconque des revendications précédentes, dans laquelle un profil longitudinal de l'amincissement de la coulisse (6) est formé de manière symétrique ou asymétrique par rapport à l'axe longitudinal de la poignée tubulaire (2).

6. Pince pour barbecue pouvant être bloquée selon l'une quelconque des revendications précédentes, **caractérisée en ce que** la coulisse (6) s'amincit linéairement en fonction de la distance par rapport à la première zone d'extrémité de la poignée tubulaire (2).

7. Pince pour barbecue pouvant être bloquée selon l'une quelconque des revendications 1 à 5, dans laquelle le profil longitudinal de l'amincissement décrit un arc d'ellipse ou un arc de cercle.

8. Pince pour barbecue pouvant être bloquée selon la revendication précédente, dans laquelle l'unité coulisseau (5) s'étend dans une direction radiale de la poignée tubulaire sensiblement à l'intérieur de la coulisse (6).

9. Pince pour barbecue pouvant être bloquée selon l'une quelconque des revendications précédentes, dans laquelle l'unité coulisseau (5) présente à une extrémité, laquelle fait saillie de la poignée tubulaire (2), un œillet.

10. Pince pour barbecue pouvant être bloquée selon l'une quelconque des revendications précédentes, dans laquelle un diamètre de la poignée tubulaire (2), un angle d'ouverture de l'amincissement de la coulisse (6), une forme des deuxièmes extrémités des bras de préhension (1, 1a, 1b) et une position de l'élément axial (4) dans la poignée tubulaire (2) sont adaptés de sorte que les bras de préhension (1, 1a, 1b) et la poignée tubulaire (2) ne se touchent pas.

11. Pince pour barbecue pouvant être bloquée selon l'une quelconque des revendications précédentes, dans laquelle les bras de préhension (1, 1a, 1b), la poignée tubulaire (2), le ressort (7), l'élément axial (4), la coulisse (6) et l'unité coulisseau (5) contiennent de l'acier inoxydable ou en sont constitués.

12. Pince pour barbecue pouvant être bloquée selon l'une quelconque des revendications précédentes, **caractérisée en ce que** l'élément axial (4) est réalisé sous la forme d'un rivet.
